# EUROPÄISCHE PATENTSCHRIFT

(11) **EP 0 340 620 B1**
(45) Veröffentlichungstag und Bekanntmachung des Hinweises auf die Patenterteilung: **15.09.1993**
(21) Anmeldenummer: 89107567.3
(22) Anmeldetag: 26.04.1989
(51) Int. Cl.: C04B 18/24, C04B 40/00

(54) **Verfahren zur Herstellung plattenförmiger Verbundstoffe**
Process for the fabrication of panel-shaped composite materials
Procédé de fabrication de matériaux composites en forme de plaque

(30) Priorität: 05.05.1988 DE 3815393
(43) Veröffentlichungstag der Anmeldung: 08.11.1989
(73) Patentinhaber: Bison-Werke Bähre & Greten GmbH & Co. KG, 31832 Springe (DE)
(72) Erfinder: Paulisan, Peter, Dipl.-Ing., D-3392 Clausthal-Zellerfeld (DE); Bittner, Wolfgang, D-3257 Springe 1 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- WO-A-85/03700
- DE-A- 2 354 485
- DE-A- 3 604 099
- US-A- 3 764 357
- CHEMICAL ABSTRACTS, vol. 105, no. 4, Columbus, Ohio, USA, ref. No. 28888F & JP-A-61048487 (MATSUSHITA ELECTRIC WORKS) 10-03-1986

## Beschreibung

Die Erfindung betrifft ein Verfahren zur Herstellung ein- oder mehrschichtiger plattenförmiger Verbundwerkstoffe nach dem Oberbegriff des Patentanspruchs 1.

Aus der DE 36 04 099 A1 ist ein gattungsgemäßes Verfahren bekannt, das mit einem hohen Wasser-Bindemittel-Verhältnis arbeitet und als sogenanntes Naßverfahren bezeichnet wird. Hierbei werden getrocknete Hartholzspäne mit einem Feuchtigkeitsgehalt zwischen 9 Gew.% und 12 Gew.% mit einem Anteil von 5 Gew.% bis 15 Gew.% des gesamten, getrockneten Gipskerns und Halbhydrat miteinander vermischt, in Wasser eingestreut und mit diesem verrührt. Bei einer anderen Variante dieses Verfahrens ist es vorgesehen, die Hartholzspäne direkt mit einem Gipsbrei aus dem Halbhydrat und Wasser zu vermengen. Ferner kann ein Verflüssiger, beispielsweise Lignosulfat oder Natrium-Naphtalin-Sulfonat zugegeben werden.

Aus der DE-PS 34 06 895 ist ein Verfahren bekannt, mit dem es zwar möglich ist, auch Hölzer zu verwenden, die größere Mengen löslicher Inhaltsstoffe, insbesondere Zucker und phenolische Verbindungen an das jeweils in der Mischung enthaltene Wasser abgeben, und dabei eine chemische Zerstörung oder Schwächung der Holzfasern zu vermeiden; nachteilig ist jedoch der erforderliche Zeitaufwand bei der Fertigung dieser Holzfaser-Formkörper. Außerdem ergibt sich nur eine geringe Anfangsfestigkeit solcher Formkörper unmittelbar nach der unter einer gewissen Erwärmung vor sich gehenden Druckausübung.

Der Erfindung liegt die Aufgabe zugrunde, ein Verfahren der eingangs angegebenen Art in der Weise auszubilden, daß unter Vermeidung des Einsatzes teuerer Kunstharze, unter Ausschaltung von Umweltproblemen sowie unter Neutralisation von die Abbindung störenden Substanzen plattenförmige Produkte erhalten werden, die eine besonders gute Wetterfestigkeit besitzen, eine hohe lineare Stabilität aufweisen und bei minimaler Preßzeit mit solcher Festigkeit gefertigt werden können, daß unmittelbar nach dem Preßvorgang eine problemfreie Handhabung möglich ist. Außerdem soll der Preßvorgang sowohl unter Verwendung von Einetagen- als auch Mehretagenpressen ohne die Notwendigkeit der Benutzung von Spanngerüsten, aber auch in kontinuierlich arbeitenden Bandpressen durchführbar sein.

Diese Aufgabe wird nach der Erfindung im wesentlichen durch die Merkmale des kennzeichnenden Teils des Anspruchs 1 gelöst.

Bevorzugte Weiterbildungen der Erfindung sind durch die Unteransprüche gekennzeichnet.

Durch entsprechende Wahl der Anteile an Portlandzement und Gips lassen sich dabei vorwiegend zement- oder gipsgebundene plattenförmige Verbundwerkstoffe herstellen.

Für das Verfahren nach der Erfindung ist es von wesentlicher Bedeutung, daß das für den Abbindevorgang erforderliche Wasser im wesentlichen nur in Form von Oberflächenwasser, und zwar vorzugsweise ausschließlich in Form von Oberflächenwasser eingebracht wird und somit die im fertigen Produkt vorzugsweise in Form von Spänen vorliegenden Teilchen bis auf einen chemisch gebundenen Wassergehalt von ca. 12 % bis 15 % praktisch frei von Wasser sind, so daß die Spanform nicht mehr durch Abgabe von Wasser durch Diffusions- und/oder Kapimllaraktivitäten aus dem Spaninneren verändert wird. Dies führt zu einem sehr dichten Gesteinsgefüge im fertigen Produkt, womit Toleranzprobleme, herrührend von einer Linearausdehnung des fertigen Produktes, vermieden werden. Eine Folge des erfindungsgemäßen Verfahrens ist auch, daß das fertige Produkt überraschend kleinporig ist und daher eine besonders gute Wetterfestigkeit erreicht wird, da ein Eindringen von Wasser, bzw. ein Vordringen von Wasser zu den Spänen von außen durch feuchte Luft, Regen oder dergleichen praktisch nicht möglich ist und im Ergebnis eine Art versiegelte Gesteinsanordnung erhalten wird.
Ein weiterer wesentlicher Vorteil besteht darin, daß aufgrund des Arbeitens mit einem Minimum an Wasser und vor allem der Vermeidung von überschüssig physikalisch verteilter Feuchtigkeit im zu verpressenden Gut während des Preßvorgangs keinerlei Entdampfungsproblem entsteht.

Wesentlich für das Verfahren nach der Erfindung ist darüber hinaus, daß der Gipsbestandteil in der ersten Phase, d.h. in der die Vliesbildung umfassenden, sich bei etwa Raumtemperatur abspielenden Phase verzögernd wirkt, daß aber nach der sprunghaften Temperaturerhöhung innerhalb der Presse sowohl die Gipskomponente als auch die mineralischen Komponenten und insbesondere auch die metallhaltigen Verbindungen beschleunigend wirken, was zur Folge hat, daß überraschend extrem kurze Preßzeiten und gleichzeitig hohe Anfangsfestigkeiten der Platten erzielt werden.

Die im Kaltmischvorgang gebildete Trockenmischung führt zu einem vergleichsweise niedrigen ph-Wert, was zur Folge hat, daß negative Auswirkungen auf die lignozellulose und/oder zellulosehaltigen Bestandteile, die insbesondere zu einer Schwächung oder Versprödung dieser Bestandteile führen könnten, weitestgehend ausgeschaltet werden.

Vorteilhaft wirkt sich auch aus, daß bereits kurz nach der Vermischung aller Bestandteile, bzw. kurz nach dem Streuen des Vlieses ein gewisser Erhärtungsvorgang einsetzt, der zu einer allerdings noch unstabilen Primärstruktur führt, die homogen und durchgehend im gesamten Verbundsystem verteilt ist, jedoch bei Raumtemperatur noch nicht zu einer Versteifung des gestreuten Vlieses führt.

Die dabei langsam verlaufenden Reaktionen, die sich über eine Zeitspanne bis zu 30 und auch 45 min. erstrecken können, werden schlagartig beschleunigt, wenn in der Presse eine Erhöhung der Hydratationstemperatur auf bis etwa 80°C erfolgt. Da die dabei auftretenden Kristallisationsreaktionen unter einer starken Volumenzunahme verlaufen, wird das zunächst lockere, dann aber unter Preßdruck verdichtete Gefüge mit einem starren Hydratphasengefüge ausgefüllt, wodurch ein äußerst kompaktes Verbundsystem entsteht.

In der Presse wird bevorzugt eine Temperaturerhöhung auf etwa 80°C vorgenommen, und bei dieser Temperatur gelingt es bereits bei einer Preßzeit von höchstens 10 min. und sogar noch weniger, Platten mit ausreichend hoher Anfangsfestigkeit und von hoher Qualität zu erhalten.

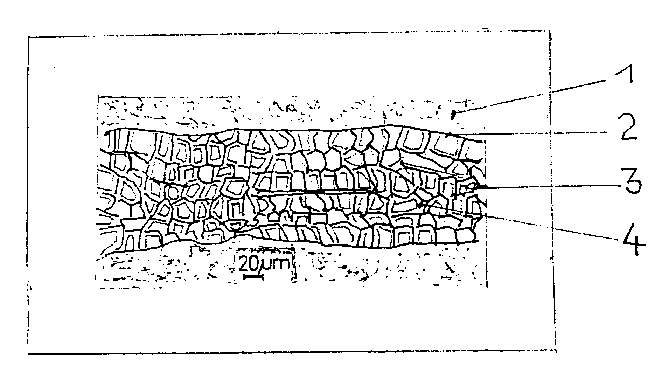

In der einzigen Figur der Zeichnung ist schematisch ein Fichte-Holzspan mit beidseitiger Zementbeschichtung in einem Zustand dargestellt, wie er sich beim Verfahren nach der Erfindung ergibt.

Die Zement-Mörtel-Beschichtung 1 besitzt dabei eine Stärke von etwa 100 µm, und diese Beschichtung grenzt an eine Zellschichten umfassende Randzone 2.
Mit dem Bezugszeichen 3 sind die Spätholztracheiden (Zellhohlräume) gekennzeichnet, die gemäß der Erfindung kein freiwerdendes Wasser enthalten. Diese Zellhohlräume sind bei bekannten Verfahren, bei denen mit einer Holzfeuchte von mehr als 30 % bis zu 100 % gearbeitet wird, voll mit sogenanntem freien Wasser gesättigt, dessen Vorhandensein zu den bereits geschilderten Schwierigkeiten führen kann und erfindungsgemäß vermieden ist.
Mit dem Bezugszeichen 4 sind die Zellwände bezeichnet, in denen sich Wasser nur in gebundener Form befindet, wenn die Holzfeuchte weniger als 30 % beträgt, wie dies für die Erfindung wesentlich ist.

Von in der Praxis bedeutsamem Vorteil ist es auch, daß das Verhältnis der Gewichtsprozente zwischen lignozellulosehaltigen und/oder zellulosehaltigen Teilchen sowie Bindemitteln und Zuschlagstoffen etwa 1:2,75 gewählt werden kann, während bei bekannten Verfahren wesentlich ungünstigere Relationen in Kauf genommen werden mußten. Die Mischungsfeuchte beträgt dabei ca. 30 bis 40 Gew.%. Für 1 m³ Platten benötigt man also in etwa folgende Rohstoffe:

| | |
|---|---|
| Zuschlagstoffe | ca. 280 kg |
| Bindemittel | ca. 770 kg |
| Chemikalien | ca. 50 kg |
| Wasser | ca. 400 kg. |

Nach dem Verfahren gemäß der Erfindung lassen sich somit anorganisch gebundene plattenförmige Werkstoffe, insbesondere in einsträngiger Weise herstellen, wobei als organische Bestandteile alle Arten von lignozellulose-und/oder zellulosehaltigen Materialien Verwendung finden können und beispielsweise bei Einsatz einer Mehretagenpresse problemlos Platten mit einer Dicke zwischen 6 mm und 32 mm hergestellt werden können, ohne daß dabei eine maximale Preßzeit von 15 min. überschritten wird.

Die auf diese Weise hergestellten, nach der Entnahme aus der Presse noch entsprechend gereiften und klimatisierten Platten weisen typischerweise folgende elastomechanischen und physikalischen Eigenschaften auf:

| | |
|---|---|
| Biegefestigkeit | 10 - 18 N/mm² |
| Rohdichte | 1000 - 1450 kg/m³ |
| Querzugfestigkeit | 0,35 - 0,65 % |
| 2Std. Dickenquellung | 0,8 % |
| 24Std. Dickenquellung | 1,8 % |
| Feuchtebedingte Längenänderung | 0,15 % |
| Dickentoleranz | 0,1 - 0,5 mm |

Beim Brandverhalten kann insbesondere durch Zusatz weiterer anorganischer Materialien ohne weiteres die Klasse A2 erreicht werden.

Das Zusammenspiel der einzelnen Komponenten im Sinne einer zunächst von einer Grundverfestigung begleiteten Verzögerung des Abbindeprozesses und einer unter dem Einfluß erhöhter Preßtemperaturen erfolgenden starken Beschleunigung des Abbindeprozesses stellt die Voraussetzung für den Einsatz sogenannter Kurztaktverfahren dar, die mittels Ein- und Mehretagenpressen sowie kontinuierlich arbeitender Bandpressen durchführbar sind, in jedem Falle aber zu einer beträchtlichen Steigerung der Wirtschaftlichkeit führen.

Die Umweltfreundlichkeit des Verfahrens nach der Erfindung resultiert auch daraus, daß ein wesentlicher Anteil der verwendeten Materialien von sogenannten Recycling-Materialien gebildet sein kann, wie z.B. Rea-Gips und Bioholzmasse einschließlich Rinde.

Für die Wirtschaftlichkeit einer nach dem erfindungsgemäßen Verfahren arbeitenden Anlage ist von Bedeutung, daß durch entsprechende Festlegung der Anteile von Zement und Gips in der gleichen Anlage je nach Wahl sowohl Zementplatten als auch Gipsplatten gefertigt werden können.

## Patentansprüche

1. Verfahren zur Herstellung ein- oder mehrschichtiger, plattenförmiger Verbundwerkstoffe unter Verwendung von lignozellulosehaltigen und/oder zellulosehaltigen Teilchen, wie z.B. von Holzspänen, Holzfasern und dergleichen sowie von wenigstens einem mineralischen Bindemittel und Zusatzstoffen, bei dem aus den vermischten, mit Wasser versetzten Bestandteilen auf einer Unterlage ein Vlies gebildet und anschließend unter gleichzeitiger Erwärmung eine Verpressung des Vlieses vorgenommen wird,
dadurch **gekennzeichnet,**
daS auf die Oberfläche von trockenen bzw. getrockneten lignozellulosehaltigen und/oder zellulosehaltigen Teilchen Wasser aufgebracht wird und diese Teilchen bei Umgebungstemperatur nach so kurzer Zeit mit einem Bindemittelgemisch vermengt werden, daß das sich an der Teilchenoberfläche befindende Wasser vor jeglichem bzw. einem merkbaren Eindringen in die Teilchen von dem Gemisch aufgenommen wird, wobei die auf die Teilchenoberfläche aufgebrachte Wassermenge so gewählt wird, daß sich eine Mischungsfeuchte zwischen 25 und 40 Gew.% ergibt, daß dann eine Überführung des Gemenges in Vliesform erfolgt, und daß anschließend unter schneller Erhöhung der Vliestemperatur auf etwa 50° bis 90°C ein Verpressen des Vlieses während einer relativ kurzen Zeitspanne vorgenommen wird.

2. Verfahren nach Anspruch 1, dadurch **gekennzeichnet,** daß als Bindemittelgemisch ein trockenes Gemisch von Portlandzement, Gips und zumindest einer reaktionsbeschleunigend wirkenden mineralischen Komponente verwendet wird.

3. Verfahren nach Anspruch 1 oder 2, dadurch **gekennzeichnet,** daß die reaktionsbeschleunigend wirkende mineralische Komponente aluminiumoxydhaltig ist.

4. Verfahren nach einem der vorhergehenden Ansprüche, dadurch **gekennzeichnet,** daß bei dem Kaltmischvorgang 20 bis 80 Gew.% Portlandzement, 10 bis 40 Gew.% Gips und 10 bis 40 Gew.% an aluminiumoxidhaltigen Komponenten vermischt werden.

5. Verfahren nach einem der vorhergehenden Ansprüche, dadurch **gekennzeichnet,** daß bei dem Kaltmischvorgang zusätzlich 0,25 bis 3 Gew.% einer pulverförmigen metallhaltigen, insbesondere leichtmetallhaltigen Verbindung, wie z.B. Natrium, Barium, Cäsium, Magnesium oder Kalium zugemischt werden.

6. Verfahren nach einem der vorhergehenden Ansprüche, dadurch **gekennzeichnet,** daß zu den trockenen bzw. getrockneten lignozellulosehaltigen und/oder zellulosehaltigen Teilchen und/oder zu dem trockenen Bindemittel oder Bindemittelgemisch organische, spezifisch leichte Zusatzstoffe als Porenfüller und/oder zur Keimbildung bei der späteren Zementsteinbildung, insbesondere in Form von Flugasche oder Perlit, zugegeben wird.

7. Verfahren nach einem der vorhergehenden Ansprüche, dadurch **gekennzeichnet,** daß der Wassergehalt der lignozellulosehaltigen und/oder zellulosehaltigen Teilchen etwa 12 % und weniger beträgt.

8. Verfahren nach einem der vorhergehenden Ansprüche, dadurch **gekennzeichnet,** daß bei dem Kaltmischvorgang etwa 2 % Perlit dazugemischt wird.

9. Verfahren nach einem der vorhergehenden Ansprüche, dadurch **gekennzeichnet,** daß der Gipsanteil in Form eines Halbhydrats, eines Anhydrits oder gipshaltiger Abbauprodukte verwendet wird.

10. Verfahren nach einem der vorhergehenden Ansprüche, dadurch **gekennzeichnet,** daß als Zusatzstoff Flugasche verwendet wird und zwar im allgemeinen in einer Menge von etwa 5 bis 20 Gew.% und vorzugsweise 10 bis 15 Gew.%.

11. Verfahren nach einem der vorhergehenden Ansprüche, dadurch **gekennzeichnet,** daß das Vermengen der Oberflächenwasser tragenden lignozellulosehaltigen und/oder zellulosehaltigen Teilchen mit dem trocknen Gemisch aus Portlandzement, Gips und Zusatzstoffen in Form eines intensives Mischens während einer Zeitspanne von etwa 10 bis 30 Sekunden erfolgt.

12. Verfahren nach einem der vorhergehenden Ansprüche, dadurch **gekennzeichnet,** daß in der Presse eine Temperaturerhöhung auf etwa 80^{o}C erfolgt und die Preßzeit maximal 10 min. beträgt.

13. Verfahren nach einem der vorhergehenden Ansprüche, dadurch **gekennzeichnet,** daß die lignozellulosehaltigen und/oder zellulosehaltigen Teilchen insbesondere eine Spanlänge bis etwa 10 mm, eine Spanbreite bis etwa 1,5 mm und eine Spandicke bis etwa 0,25 mm aufweisen.

14. Verfahren nach einem der vorhergehenden Ansprüche, dadurch **gekennzeichnet,** daß in die Mischung zusätzlich anorganische Materialien, insbesondere in Form von Vermiculaten und/oder Glasfasern oder glasfaserartigen Stoffen eingebracht werden.

15. Verfahren nach einem der vorhergehenden Ansprüche, dadurch **gekennzeichnet,**
daß die Mischungsfeuchte der Mittelschicht geringer gewählt wird als die Mischungsfeuchte der Deckschichten, wobei die Mischungsfeuchte der Mittelschicht vorzugsweise 30 Gew.% bis 35 Gew.% und die Mischungsfeuchte der Deckschichten vorzugsweise 38 Gew.% bis 40 Gew.% beträgt.

16. Verfahren nach einem der vorhergehenden Ansprüche, dadurch **gekennzeichnet,**
daß der Preßvorgang in einer kontinuierlich arbeitenden Bandpresse oder einer Ein- oder Mehretagenpresse bei einem spezifischen Preßdruck bis zu etwa 5 N/mm² durchgeführt wird.

17. Verfahren nach einem der vorhergehenden Ansprüche, dadurch **gekennzeichnet,**
daß die der Presse entnommenen Verbundwerkstoffplatten formbeständig und entblechbar sind und ohne einen zusätzlichen Aushärtevorgang etwa zehn bis vierzehn Tage bis zum Ende der Hydratation zwischengelagert werden.

18. Verfahren nach einem der vorhergehenden Ansprüche, dadurch **gekennzeichnet,**
daß das Verhältnis der Gewichtsprozente zwischen lignozellulosehaltigen und / oder zellulosehaltigen Teilchen und / oder Fasern sowie Bindemitteln und Zuschlagstoffen etwa 1 : 2,75 beträgt.

## Claims

1. A method of manufacturing single or multi-layer board-like composite materials using particles containing lignocellulose and/or cellulose, such as for example wood chips, wood fibers and the like, and also using at least one mineral binder and additives, in which a mat is formed on a substrate from the mixed components with water dispersed therein and a pressing of the mat is subsequently effected with simultaneous heating,
characterized in that
water is applied to the surface of the dry and/or dried particles containing lignocellulose and/or cellulose and these particles are mixed at environmental temperature with a binder mixture after a time which is so short that the water located on the surface of the particles is taken up by the mixture before any penetration or any notable penetration into the particles, with the quantity of water applied to the particle surface being selected so that moisture content of the mixture between 25 and 40 % by weight results; in that a transfer of the mixture into mat form then takes place; and in that pressing of the mat is subsequently effected during a relatively short time interval with a rapid increase of the temperature of the mat to approximately 50° to 90°C.

2. Method in accordance with claim 1, characterized in that a dry mixture of Portland cement, gypsum and at least one mineral component acting to accelerate the reaction is used as the binder mixture.

3. Method in accordance with claim 1 or claim 2, characterized in that the mineral component which acts to accelerate the reaction contains aluminium oxide.

4. Method in accordance with one of the preceding claims, characterized in that with the cold mixing process 20 to 80 % by weight of Portland cement, 10 to 40 % by weight of gypsum and 10 to 40 % by weight of components containing aluminium oxide are mixed.

5. Method in accordance with one of the preceding claims, characterized in that with the cold mixing process 0.25 to 3 % by weight of a powdered metal containing compound, in particular a light metal containing compound, such as sodium, barium, cesium, magnesium or potassium is additionally mixed in.

6. Method in accordance with one of the preceding claims, characterized in that organic specifically lighter additives serving as pore fillers and/or for nucleation during the later formation of cement stone, in particular additives in the form of fly ash or perlite, is added to the dry and/or dried particles containing lignocellulose and/or cellulose, and/or to the dry binder or binder mixture.

7. Method in accordance with one of the preceding claims, characterized in that the water content of the particles containing lignocellulose and/or cellulose amounts to approximately 12 % or less.

8. Method in accordance with one of the preceding claims, characterized in that approximately 2 % of perlite is mixed in during the cold mixing process.

9. Method in accordance with one of the preceding claims, characterized in that the gypsum component is used in the form of a hemihydrate, of an anhydrite or of gypsum containing derivative products.

10. Method in accordance with one of the preceding claims, characterized in that fly ash is used as additive material and indeed generally in a quantity of approximately 5 to 20 % by weight and preferably 10 to 15 % by weight.

11. Method in accordance with one of the preceding claims, characterized in that the mixing of the lignocellulose containing and/or cellulose containing particles carrying the surface water with the dry mixture of Portland cement and gypsum and additive materials takes place in the form of an intensive mixing during a time interval of approximately 10 to 30 seconds.

12. Method in accordance with one of the preceding claims, characterized in that a temperature increase to approximately 80°C takes place in the press and the press time amounts to a maximum of 10 minutes.

13. Method in accordance with one of the preceding claims, characterized in that the particles containing lignocellulose and/or cellulose have in particular a chip length of up to approximately 10 mm, a chip width of up to approximately 1.5 mm and a chip thickness of up to approximately 0.25 mm.

14. Method in accordance with one of the preceding claims, characterized in that inorganic materials, in particular in the form of vermiculates and/or glass fibers or glass fiber-like substances are additionally introduced into the mixture.

15. Method in accordance with one of the preceding claims, characterized in that the moisture content of the mixture for the middle layer is selected to be lower than the moisture content of the mixture for the cover layers, with the moisture content of the mixture for the middle layer preferably amounting to 30 % by weight to 35 % by weight and the moisture content of the mixture for the cover layers preferably amounting to 38 % by weight to 40 % by weight.

16. Method in accordance with one of the preceding claims, characterized in that the pressing process is carried out in a continuously operating band press, or in a single or multi-storey press, with a specific press pressure of up to approximately 5 N/mm².

17. Method in accordance with one of the preceding claims, characterized in that the composite material boards removed from the press are of stable shape and removable from sheet metal carriers and are subjected to intermediate storage without an additional curing process for approximately 10 to 14 days up to the end of the hydration process.

18. Method in accordance with one of the preceding claims, characterized in that the ratio of the percentage by weight between the particles containing lignocellulose and/or cellulose and/or fibers and also binders and additives amounts to approximately 1 : 2.75.

## Revendications

1. Procédé pour la fabrication de matériaux composites sous forme de plaques à une ou plusieurs couches en utilisant des particules contenant de la lignocellulose et/ou de la cellulose, comme par exemple des copeaux de bois, des fibres de bois et analogues, ainsi qu'un liant minéral au moins et des agrégats, procédé dans lequel une nappe de fibres est, à partir de composants mélangés, additionnés d'eau, formée sur un support, puis est comprimée sous élévation simultanée de la température,
**caractérisé** en ce que
de l'eau est répandue sur la surface de particules sèches ou desséchées contenant de la lignocellulose et/ou de la cellulose et que ces particules sont, à température ambiante, mélangées à un mélange de liants, après un temps si court que l'eau qui se trouve à la surface des particules est absorbée par le mélange avant toute pénétration ou avant une pénétration sensible dans les particules, la quantité d'eau répandue à la surface des particules étant choisie, de manière que l'on obtienne une humidité du mélange entre 25 et 40% en poids, en ce qu'ensuite se produit une transformation du mélange sous forme d'une nappe de fibres et en-ce qu'après, sous élévation rapide de la température de la nappe de fibres comprise entre 50 et 90°C environ, une compression de la nappe de fibres est effectuée pendant une fourchette de temps relativement courte.

2. Procédé selon la revendication 1,
**caractérisé** en ce que le mélange de liant utilisé est un mélange séché de portland artificiel, de gypse et d'au moins un composant minéral agissant comme accélérateur de la réaction.

3. Procédé selon la revendication 1 ou 2,
**caractérisé** en ce que le composant minéral agissant comme accélérateur de la réaction contient de l'oxyde d'aluminium.

4. Procédé selon l'une des revendications précédentes,
**caractérisé** en ce que, lors du processus de mélange à froid, sont mélangés de 20 à 80% en poids de portland artificiel, de 10 à 40% en poids de gypse et de 10 à 40% en poids de composants contenant de l'oxyde d'aluminium.

5. Procédé selon l'une des revendications précédentes,
**caractérisé** en ce que, lors du processus de mélange à froid, l'on mélange en plus de 0,25% à 3% en poids d'un composé pulvérulent contenant du métal, du métal léger notamment, comme par exemple du sodium, du césium, du magnésium ou du potassium.

6. Procédé selon l'une des revendications précédentes,
**caractérisé** en ce que, aux particules séchées ou desséchées contenant de la lignocellulose et/ou de la cellulose et/ou au liant séché ou au mélange de liants, l'on ajoute, en particulier sous forme de cendres volantes ou de perlite, des adjuvants organiques, de faible spécificité, en tant que bouche-pores et/ou pour la germination lors de la formation ultérieure de la pâte de ciment après prise.

7. Procédé selon l'une des revendications précédentes,
**caractérisé** en ce que la teneur en eau des particules contenant de la lignocellulose et/ou de la cellulose s' élève sensiblement à 12% et moins.

8. Procédé selon l'une des revendications précédentes,
**caractérisé** en ce qu'environ 2% de perlite sont ajoutés lors du processus de mélange à froid.

9. Procédé selon l'une des revendications précédentes,
**caractérisé** en ce que la portion de gypse est utilisée sous forme d'un plâtre demi-cuit, d'une anhydrite ou de produits de réduction contenant du gypse.

10. Procédé selon l'une des revendications précédentes,
**caractérisé** en ce que l'adjuvant utilisé est de la cendre volante et ce, généralement, en une quantité allant de 5 à 20% en poids environ, de 10 à 15% en poids de préférence.

11. Procédé selon l'une des revendications précédentes,
**caractérisé** en ce que le mélange de particules contenant de la lignocellulose et/ou de la cellulose et portant l'eau de surface avec le mélange séché de portland artificiel, de gypse et d'adjuvants, sous forme d'un mélange intensif, s'effectue pendant une fourchette de temps allant de 10 à 30 secondes environ.

12. Procédé selon l'une des revendications précédentes,
**caractérisé** en ce que, dans la presse, a lieu une élévation de température d'environ 80°C, la durée maximale de la compression s'élevant à 10 minutes.

13. Procédé selon l'une des revendications précédentes,
**caractérisé** en ce que les particules contenant de la lignocellulose et/ou de la cellulose présentent une longueur de copeaux jusqu'à 10 mm environ, une largeur de copeaux jusqu'à 1,5 mm environ et une épaisseur de copeaux jusqu'à 0,25 mm environ.

14. Procédé selon l'une des revendications précédentes,
**caractérisé** en ce que l'on inclut, en complément dans le mélange, des matériaux inorganiques sous forme notamment de vermiculite et/ou de fibres de verre ou de matériaux du type fibres de verre.

15. Procédé selon l'une des revendications précédentes,
**caractérisé** en ce que l'humidité du mélange de la couche médiane est choisie inférieure à celle des couches de couverture, l'humidité du mélange de la couche médiane s'élevant de préférence entre 30 et 35% en poids et celle des couches de couverture de préférence entre 38 et 40% en poids.

16. Procédé selon l'une des revendications précédentes,
**caractérisé** en ce que le processus de compression est mené dans une bande de pressage travaillant en continu ou dans une presse à un ou plusieurs étages, avec une pression spécifique de compression allant jusqu'à 5 N/mm² environ.

17. Procédé selon l'une des revendications précédentes,
**caractérisé** en ce que les plaques de matériau composites sorties de la presse sont résistantes à la déformation et peuvent être extraites de la tôle ; elles sont,sans processus de durcissement supplémentaire, entreposées environ dix à quatorze jours, jusqu'à la fin de l'hydratation.

18. Procédé selon l'une des revendications précédentes,
**caractérisé** en ce que le rapport des pourcentages en poids entre les particules contenant de la lignocellulose et/ou de la cellulose, et/ou les fibres, ainsi que les liants et les agrégats s'élève à 1 : 2,75 environ.
